# EUROPEAN PATENT SPECIFICATION

(11) **EP 1 884 312 B1**
(45) Date of publication and mention of the grant of the patent: **11.03.2009**
(21) Application number: 06425563.1
(22) Date of filing: 04.08.2006
(51) Int. Cl.: B23Q 3/06, F01D 5/00

(54) **A device for blocking a blade of a turbine and a method for blade machining using said blocking device**
Vorrichtung zum Halten eines Turbinenblattes und Verfahren zur Blattbearbeitung unter der Verwendung dieser Haltevorrichtung
Dispositif pour fixe de maintien d' une aube de turbine et procédé d' usinage utilisant ledit dispositif

(43) Date of publication of application: 06.02.2008
(73) Proprietor: ANSALDO ENERGIA S.P.A., 16152 Genova (IT)
(72) Inventor: Grasso, Luciano, 16164 Genova (IT)
(74) Representative: Cerbaro, Elena

(56) References cited:
- JP-A- 3 194 102
- US-A- 2 672 690
- US-A- 4 805 351
- US-A- 4 829 720
- US-A- 5 013 014

## Description

The present invention relates to a device for blocking a blade of a turbine and to a method for blade machining using said device.

In particular, the present invention relates to a device for blocking a blade of a turbine, designed to keep the blade of a turbine fixed during machining of a bottom surface of one of the end portions of the blade.

A known type of blocking device, for example the one disclosed in the US 4829720 patent, comprises a resting structure, which includes means for supporting a leading edge and a trailing edge of the blade, and a mobile part, locking the body of the blade along its suction side against the resting structure so as to permit complete machining of a bottom surface of one of the- end portions of the blade. Devices of the above type suffer from a series of drawbacks, principally due to the fact that the blade is kept fixed by blocking the body of the blade at the leading edge, the trailing edge and the suction side of the blade. Moreover, the body of the blade is warp-shaped so that clamping the body of the blade is still more complicated.

Precisely on these accounts, this type of fixing is not stable. It follows that, during machining of the end portions of the blades, above all when machining involves relatively long times, as for example in machining operations with chip's removal, the blades are subjected to vibrations that give rise to machining imperfections, that determine discarding the piece, with evident disadvantages from the economic standpoint.

The blades of turbines call, in fact, for a relatively high degree of finishing and precision in machining. In particular, the end portions of the blade of the turbine play a role of fundamental importance for correct operation of the turbine. A first end portion is designed to be fixed to the internal rotating structure of the turbine, whilst a second end portion, opposite to the first, is designed to engage a respective groove of the outer casing of the turbine so as to prevent the passage of gas or steam between the outer casing of the turbine and the second end portion of the blade and for conveying the flow of gas or steam only in the areas comprised between the blades. The type of machining that is typically carried out on the second end portion of the blade is machining with chip's removal, which permits shaping of the second end portion of the blade so as to render it as far as possible complementary to the groove of the outer casing of the turbine.

It is, therefore, fundamental for the second end portion of the blade to be machined precisely so as to guarantee an adequate tightness.

The blades of turbines, moreover, have dimensions, in terms of axial length, which range between a minimum of a few centimetres and a maximum in the region of one metre. Known blocking devices are not easily and quickly adaptable to the different dimensions of the blades of the turbine and require the replacement of different parts of the blocking device itself.

The object of the present invention is to provide a blocking device that does not present any of the drawbacks of the above-referred prior art. In particular, an object of the invention is to provide a reliable, efficient and economically advantageous blocking device.

In accordance with said purposes, the present invention relates to a device for blocking a blade of a turbine according to claim 1.

A further object of the invention is to provide a method for machining a blade of a turbine according to claim 13.

Further features and advantages of the present invention will emerge clearly from the ensuing description of a non-limiting example of an embodiment thereof, with reference to the figures of the annexed drawings, wherein:
- Figure 1 is a side elevation view, with parts removed for clarity, of the blocking device according to the present invention in a first operative position;
- Figure 2 is a perspective view of the blocking device of Figure 1; and
- Figure 3 is a perspective view of the device of Figure 1 in a second operative position.

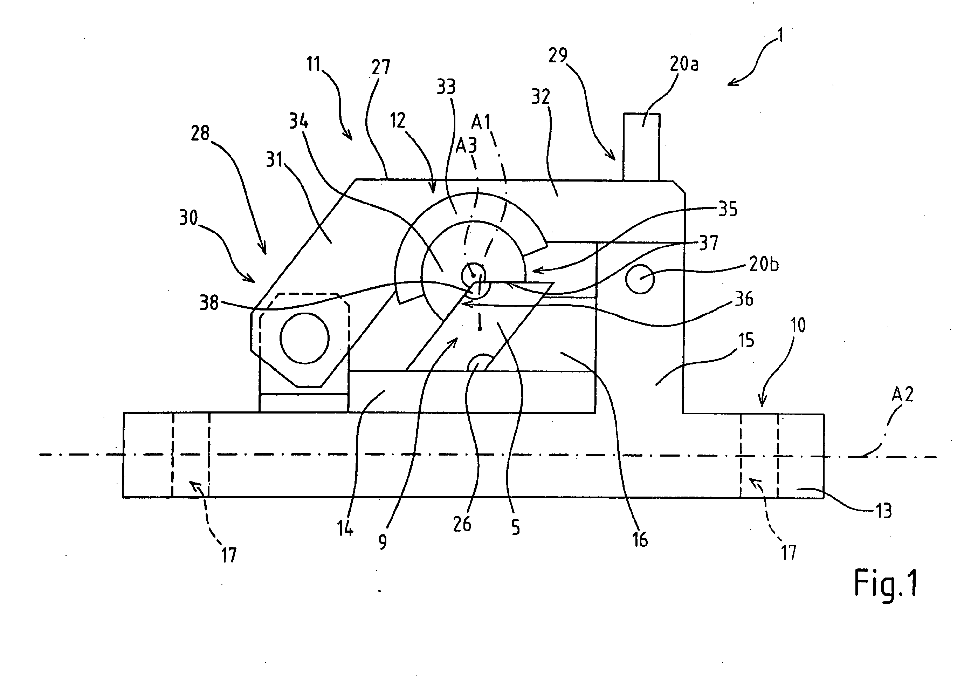

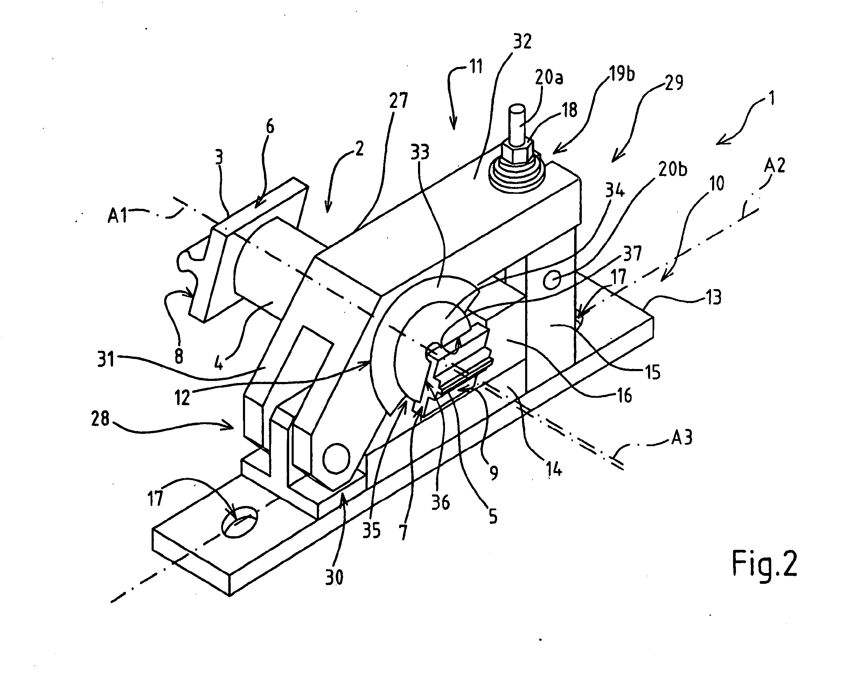

In Figures 1 and 2, designated by the reference number 1 is a device for blocking the blade 2 of a turbine.

With particular reference to Figure 2, the blade 2 extends along an axis A1 and comprises: an end portion 3, designed to be fixed to an internal rotating structure of the turbine (not shown in the figures); a central body 4, which has a warped shape; and an end portion 5, designed to engage a respective groove of an outer casing of the turbine (not shown in the figures).

Each end portion 3 and 5 has, respectively, a lateral surface 6 and 7 and a bottom surface 8 and 9, which is generally lozenge-shaped.

In what follows, it will be assumed that the blocking device 1 blocks the blade 2 in a position corresponding to the end portion 5, it being understood that the same blocking device 1 is able to block the blade 2 in a position corresponding to the end portion 3.

With reference to Figures 1 and 2, the blocking device 1 comprises a resting structure 10, a mobile part 11, and a blocking member 12.

The resting structure 10 extends principally along an axis A2, which is preferably horizontal, and comprises: a base 13; a resting plate 14, which is coupled fixedly to the base 13; an coupling element 15; and a tooth 16.

The base 13 has a quadrangular shape and has, in the proximity of the ends, two holes 17 for possible anchorage to a work table (not shown in the enclosed figures).

The resting plate 14 is supported by the base 13 in a position corresponding to a central portion of the base 13.

The coupling element 15 has a substantially parallelepipedal shape, projects from the base 13 in a direction orthogonal to the axis A2, and is set in contact with the resting plate 14.

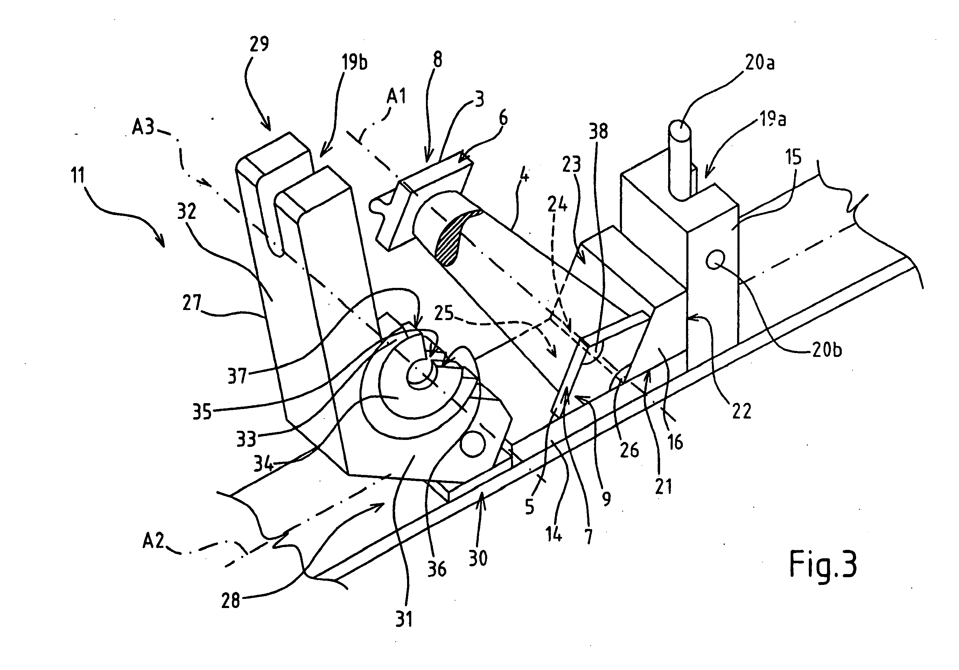

With reference to Figure 3, the coupling element 15 has an opening 19a, which is designed to house a threaded pin 20a. The pin 20a is fixed to a second pin 20b, which is set substantially orthogonal to the pin 20a and is housed in a hole of the coupling element 15. Said type for connection between the pin 20a and the pin 20b permits rotation of the pin 20a between an operative position of engagement (Figure 3) and a position of rest.

The tooth 16 has a substantially prismatic shape and has a base 21 fixed to the resting plate 14, a side 22 in contact with the coupling element 15, and an inclined side 23, which defines, together with the resting plate 14, a seat 24 designed to house the end portion 5.

The seat 24 comprises, then, two adjacent surfaces, the first of which is the side 23 of the tooth and the second is a portion 25 of outer surface of the resting plate 14, which form an angle that is substantially equal to a first angle 26 of the bottom surface 9 of the end portion 5. The adjacent surfaces 23 and 25 are designed to be arranged in abutment against the lateral surface 7 of the end portion 5.

The mobile part 11 comprises an arm 27, which has a first end 28 and a second end 29. The first end 28 of the arm 27 is hinged to the resting structure 10, in particular to the base 13, by means of a hinge 30, and the second end 29 of the arm 27 has an opening 19b, designed to be selectively engaged by the pin 20a for engaging the arm 27 to the coupling element 15 of the resting structure 10. Fixing between the coupling element 15 and the arm 27 is obtained via a nut 18 (Figure 2), screwed to the threaded pin 20a.

The arm 27 comprises a first section 31 and a second section 32, which are adjacent and inclined with respect to one another. In particular, the first section 31, comprising the first end 28, is oblique with respect to the axis A2 of the resting structure 10, whilst the second section 32, comprising the second end 29, is parallel to the axis A2 of the resting structure 10.

The blocking member 12 comprises a pocket 33 and a disk 34 having an axis A3 transverse to the axis A2 of the resting structure 10.

The pocket 33 is fixed to the arm 27, preferably by means of spot-welding, in an intermediate position comprised between the first end 28 and the second end 29 and defines a circular seat 35.

The disk 34 is relatively thin, in general its thickness being comprised in a range between 3 mm and 10 mm, and is supported by the arm 27 so that it can turn about the axis A3. The disk 34 is perforated at the centre and has one cut away portion, which defines two coupling surfaces 36 and 37, designed to be arranged in abutment against the lateral surface 7 of the end portion 5. The coupling surfaces 36 and 37 form an angle substantially equal to a second angle 38 of the bottom surface 9 of the end portion 5. The disk 34 is designed to engage the circular seat 35 and is surrounded by the pocket 33, which extends around the disk 34 along an arc of circumference that subtends an angle greater than 180° for withholding the disk 34 in the seat 35.

The sliding coupling between the disk 34 and the pocket 33 permits adaptation of the coupling surfaces 36 and 37 to the lateral surface 7 of the end portion 5.

Basically, the end portion 5 is blocked in the seat 24 by the tooth 16 and by the disk 34, which co-operate, in abutment against the lateral surface 7 of the end portion 5.

In particular, since the bottom surfaces 8 and 9 are generally lozenge-shaped, the first and second angles 26 and 38 are equal and obtuse. Consequently, the adjacent surfaces 23 and 25 of the seat 24 and the coupling surfaces 36 and 37 of the disk 34 form angles that are equal and obtuse.

In this way, the blade 2 blocked by the blocking device 1 is set in such a way that the axis A1 is substantially horizontal.

With reference to Figures 2 and 3, the method for machining the blade 2 of a turbine comprises the steps of: blocking the blade 2 in a given position; and carrying out a machining operation with chip's removal along an end portion 5 for re-defining the shape of the bottom surface 9.

The step of blocking the blade 2 in a given position comprises the step of blocking the end portion 5, the bottom surface 9 of which is re-defined via the blocking device 1 just described. In particular, the end portion 5 is blocked so that the axis A1 of the blade 2 is set substantially horizontal.

Specifically, the step of blocking the end portion 5 provides that the end portion 5 is set on the resting base 10 in a position corresponding to the seat 24, and is clamped between the blocking member 12 of the mobile part 11 and the resting base 10 by engagement of the end 29 of the arm 27 to the coupling element 15, so that the disk 34 and the tooth 16 are set in abutment against the lateral surface 7 of the end portion 5.

A variant of the method of machining just described provides that the end portion 3, opposite to the end portion 5, is blocked, prior to carrying out the machining operation with chip's removal along the end portion 5, with a further blocking device presenting the characteristics described so far for the blocking device 1 to improve the stability of blocking during machining.

In this variant, the blocking device and the further blocking device lie in one and the same horizontal plane and are spaced apart from one another. The distance between the blocking device and the further blocking device is variable, for example by means of sliding in a direction perpendicular to the second axis A2 of the further blocking device along a guide (not shown in the enclosed figures) to permit adaptation to the different dimensions, in terms of length, of the blades 2 of the turbine.

The device according to the present invention has the following advantages.

First of all, the process of blocking an end portion 3 or 5 of the blade 2, and not the central body 4 of the blade 2, guarantees a greater stability of blocking and hence permits a greater precision in machining of the bottom surfaces 8 or 9 of the end portions 3 or 5, with a considerable reduction of rejects and evident advantages from an economic standpoint.

In the second place, the disk 34 is made sufficiently thin so as to permit an adequate tightness of blocking of the end portion 5 and simultaneously so as not to hamper complete machining by chip's removal of the bottom surface 9 of the end portion 5.

In the third place, since the disk 34 can turn about its own axis A3, it can be adapted to a wide range of blades 2 of the turbine. In particular, a disk 34 with a given cutaway portion is adaptable to a range of blades 2 having end portions 3 or 5 of dimensions contained within a given range. In any case, it is possible to replace the disk 34 with another disk of the same diameter in a fast and simple way, but with a cutaway portion of different dimensions, so that the disk is adaptable to a different range of blades 2.

Finally, the device according to the present invention is simple to use and is easy and inexpensive to produce.

## Claims

1. A device for blocking (1) the blade (2) of a turbine, the blade (2) extending along a first axis (A1) and comprising two end portions (3, 5), each of which has a lateral surface (6; 7) adjacent to a bottom surface (8; 9) generally lozenge-shaped; the blocking device (1) being designed to keep the blade (2) fixed during machining of at least one of the bottom surfaces (8, 9); the blocking device (1) comprising a resting structure (10), which extends along a second axis (A2) and is designed to support one of the end portions (3; 5) of the blade (2), and a mobile part (11) which clamps said end portion (3; 5) of the blade (2) to permit complete machining of the bottom surface (8; 9) of said end portion (3; 5) of the blade (2); the blocking device (1) being **characterized in that** the mobile part (11) comprises a blocking member (12), which comprises a disk (34) that is relatively thin and has a third axis (A3) transverse to the second axis (A2); the disk (34) being supported by the mobile part (11) so that it can turn about the third axis (A3); the disk (34) having one cut away portion defining coupling surfaces (36, 37) designed to be arranged in abutment against the lateral surface (6; 7) of said end portion (3; 5).

2. The blocking device according to Claim 1, **characterized in that** the mobile part (11) and the resting structure (10) are oriented and shaped so that the first axis (A1) of the blade (2) is set substantially horizontal.

3. The blocking device according to Claim 1 or Claim 2, **characterized in that** the resting structures (10) comprises a tooth (16), which defines a seat (24) designed to house said end portion (3; 5).

4. The blocking device according to Claim 3, **characterized in that** the seat (24) comprises two adjacent surfaces (23, 25), which form an angle substantially equal to a first angle (26) of the bottom surface (8; 9) of said end portion (3; 5); said surfaces (23, 25) of the seat (24) being designed to be arranged in abutment against the lateral surface (6; 7) of said end portion (3; 5).

5. The blocking device according to any one of the preceding claims, **characterized in that** the mobile part (11) is an arm (27), which has a first: end (28) and a second end (29); the first end (28) of the arm (27) being hinged to the resting structure (10) and the second end (29) of the arm (27) being designed to be engaged to the resting structure (10).

6. The blocking device according to Claim 5, **characterized in that** the second end (29) of the arm (27) is engaged to the resting structure (10).

7. The blocking device according to Claim 5 or Claim 6, **characterized in that** the arm (27) comprises two adjacent sections (31, 32), which are inclined with respect to one another.

8. The blocking device according to Claim 7, **characterized in that** the first section (31) comprises the first end (28) of the arm (27) and the second section (32) comprises the second end (29) of the arm (27); the first section (31) being oblique with respect to the second axis (A2) of the resting structure (10) and the second section (32) being parallel to the second axis (A2) of the resting structure (10).

9. The blocking device according to any one of Claims 4 to 8, **characterized in that** the coupling surfaces (36, 37) form an angle substantially equal to a second angle (38) of the bottom surface (8; 9) of said end portion (3; 5), opposite to the first angle (26) of the bottom surface (8; 9).

10. The device according to any one of the preceding Claims, **characterized in that** the thickness of the disk (34) is comprised in a range of between 3 mm and 10 mm.

11. The blocking device according to any one of the preceding Claims, **characterized in that** the blocking member (12) comprises a pocket (33), which is fixed to the mobile part (11) and defines a circular seat (35), designed to be engaged by the disk (34).

12. The blocking device according to Claim 11, **characterized in that** the pocket (33) extends around the disk (34) along an arc of circumference that subtends an angle greater than 180° for withholding the disk (34) in the seat (35).

13. A method for machining a blade (2) of a turbine, the blade (2) comprising two end portions (3, 5), each of which has a lateral surface (6; 7) adjacent to a bottom- surface (8; 9) generally lozenge-shaped; the method comprising the steps of: blocking the blade (2) in a given position; and carrying out a machining operation with chip's removal along one of the end portions (3; 5) for re-defining the shape of the bottom surface (8; 9); the method being **characterized in that** said end portion (3; 5), the bottom surface (8; 9) of which is to be re-defined, is blocked by means of the blocking device (1) along the lateral surface (6;7) as claimed in any one of the preceding claims.

14. The method for machining the blade (2) of a turbine according to Claim 13, **characterized in that** said end portion (3; 5) is blocked so that the first axis (A1) of the blade (2) is set substantially horizontal.

15. The method for machining the blade (2) of a turbine according to Claim 13 or Claim 14, **characterized in that** it comprises the step of blocking the other end portion (5; 3) with a further blocking device claimed in one of Claims 1 to 12 prior to carrying out the machining operation with chip's removal along said end portion (3; 5), to improve the stability of blocking.

16. The method for machining the blade (2) of a turbine according to Claim 15, **characterized in that** the blocking device (1) and the further blocking device are able to slide with respect to one another in a direction orthogonal to the second axis (A2).

## Patentansprüche

1. Vorrichtung zum Halten (1) der Schaufel (2) einer Turbine, wobei sich die Schaufel (2) längs einer ersten Achse (A1) erstreckt und zwei Endabschnitte (3, 5) aufweist, von denen jeder eine Seitenfläche (6; 7) aufweist, die an eine Bodenfläche (8; 9) angrenzt, die im Allgemeinen rautenförmig ist; wobei die Haltevorrichtung (1) dazu bestimmt ist, die Schaufel (2) während der Bearbeitung mindestens einer der Bodenflächen (8, 9) feststehend zu halten; wobei die Haltevorrichtung (1) eine Auflagestruktur (10), die sich längs einer zweiten Achse (A2) erstreckt und dazu bestimmt ist, einen der Endabschnitte (3; 5) der Schaufel (2) zu stützen, und einen beweglichen Teil (11) aufweist, der den Endabschnitt (3; 5) der Schaufel (2) festklemmt, um eine vollständige Bearbeitung der Bodenfläche (8; 9) des Endabschnitts (3; 5) der Schaufel (2) zu ermöglichen; wobei die Haltevorrichtung (1) **dadurch gekennzeichnet ist, dass** der bewegliche Teil (11) ein Halteelement (12) aufweist, das eine Scheibe (34) aufweist, die verhältnismäßig dünn ist und eine dritte Achse (A3) quer zur zweiten Achse (A2) aufweist; wobei die Scheibe (34) durch den beweglichen Teil (11) gestützt wird, so dass sie sich um die dritte Achse (A3) drehen kann; wobei die Scheibe (34) einen abgeschnittenen Abschnitt aufweist, der Kopplungsflächen (36, 37) definiert, die dazu bestimmt sind, anstoßend an die Seitenfläche (6; 7) des Endabschnitts (3; 5) angeordnet zu werden.

2. Haltevorrichtung nach Anspruch 1, **dadurch gekennzeichnet, dass** der bewegliche Teil (11) und die Auflagestruktur (10) so orientiert und geformt sind, dass die erste Achse (A1) der Schaufel (2) im Wesentlichen horizontal eingestellt ist.

3. Haltevorrichtung nach Anspruch 1 oder 2, **dadurch gekennzeichnet, dass** die Auflagestruktur (10) einen Zahn (16) aufweist, der einen Sitz (24) definiert, der dazu bestimmt ist, den Endabschnitt (3; 5) aufzunehmen.

4. Haltevorrichtung nach Anspruch 3, **dadurch gekennzeichnet, dass** der Sitz (24) zwei angrenzende Flächen (23, 25) aufweist, die einen Winkel bilden, der im Wesentlichen gleich einem ersten Winkel (26) der Bodenfläche (8; 9) des Endabschnitts (3; 5) ist; wobei die Flächen (23, 25) des Sitzes (24) dazu bestimmt sind, anstoßend an die Seitenfläche (6; 7) des Endabschnitts (3; 5) angeordnet zu werden.

5. Haltevorrichtung nach einem der vorhergehenden Ansprüche, **dadurch gekennzeichnet, dass** der bewegliche Teil (11) ein Arm (27) ist, der ein erstes Ende (28) und ein zweites Ende (29) aufweist; wobei das erste Ende (28) des Arms (27) gelenkig mit der Auflagestruktur (10) verbunden ist, und das zweite Ende (29) des Arms (27) dazu bestimmt ist, mit der Auflagestruktur (10) in Eingriff gebracht zu werden.

6. Haltevorrichtung nach Anspruch 5, **dadurch gekennzeichnet, dass** das zweite Ende (29) des Arms (27) mit der Auflagestruktur (10) in Eingriff gebracht wird.

7. Haltevorrichtung nach Anspruch 5 oder 6, **dadurch gekennzeichnet, dass** der Arm (27) zwei angrenzende Abschnitte (31, 32) aufweist, die in Bezug zueinander geneigt sind.

8. Haltevorrichtung nach Anspruch 7, **dadurch gekennzeichnet, dass** der erste Abschnitt (31) das erste Ende (28) des Arms (27) aufweist und der zweite Abschnitt (32) das zweite Ende (29) des Arms (27) aufweist; wobei der erste Abschnitt (31) bezüglich der zweiten Achse (A2) der Auflagestruktur (10) schräg verläuft, und der zweite Abschnitt (32) parallel zur zweiten Achse (A2) der Auflagestruktur (10) verläuft.

9. Haltevorrichtung nach einem der Ansprüche 4 bis 8, **dadurch gekennzeichnet, dass** die Kopplungsflächen (36, 37) einen Winkel bilden, der im Wesentlichen gleich einem zweiten Winkel (38) der Bodenfläche (8; 9) des Endabschnitts (3; 5) ist, gegenüber dem ersten Winkel (26) der Bodenfläche (8; 9).

10. Vorrichtung nach einem der vorhergehenden Ansprüche, **dadurch gekennzeichnet, dass** die Dicke der Scheibe (34) in einem Bereich von 3 mm bis 10 mm liegt.

11. Haltevorrichtung nach einem der vorhergehenden Ansprüche, **dadurch gekennzeichnet, dass** das Halteelement (12) eine Tasche (33) aufweist, die am beweglichen Teil (11) befestigt ist und einen kreisförmigen Sitz (35) definiert, der dazu bestimmt ist, durch die Scheibe (34) in Eingriff genommen zu werden.

12. Haltevorrichtung nach Anspruch 11, **dadurch gekennzeichnet, dass** sich die Tasche (33) längs eines Umfangsbogens, der einem Winkel von mehr als 180° gegenüberliegt, um die Scheibe (34) erstreckt, um die Scheibe (34) im Sitz (35) festzuhalten.

13. Verfahren zum Bearbeiten einer Schaufel (2) einer Turbine, wobei die Schaufel (2) zwei Endabschnitte (3, 5) aufweist, von denen jeder eine Seitenfläche (6; 7) aufweist, die an eine Bodenfläche (8; 9) angrenzt, die im Allgemeinen rautenförmig ist; wobei das Verfahren die Schritte aufweist: Halten der Schaufel (2) in einer gegebenen Position; und Ausführen eines Bearbeitungsvorgangs mit einer Spanabhebung längs eines der Endabschnitte (3; 5) zur Neudefinition der Form der Bodenfläche (8; 9); wobei das Verfahren **dadurch gekennzeichnet ist, dass** der Endabschnitt (3; 5), dessen Bodenfläche (8; 9) neu definiert werden soll, mittels der Haltevorrichtung (1) nach einem der vorhergehenden Ansprüche längs der Seitenfläche (6;7) gehalten wird.

14. Verfahren zum Bearbeiten der Schaufel (2) einer Turbine nach Anspruch 13, **dadurch gekennzeichnet, dass** der Endabschnitt (3; 5) so gehalten wird, dass die erste Achse (A1) der Schaufel (2) im wesentlichen horizontal eingestellt wird.

15. Verfahren zum Bearbeiten der Schaufel, (2) einer Turbine nach Anspruch 13 oder 14, **dadurch gekennzeichnet, dass** es den Schritt des Haltens des anderen Endabschnitts (5; 3) mit einer weiteren Haltevorrichtung nach einem der Ansprüche 1 bis 12 vor dem Ausführen des Bearbeitungsvorgangs mit einer Spanabhebung längs des Endabschnitts (3; 5) aufweist, um die Stabilität des Haltens zu verbessern:

16. Verfahren zum Bearbeiten der Schaufel (2) einer Turbine nach Anspruch 15, **dadurch gekennzeichnet, dass** die Haltevorrichtung (1) und die weitere Haltevorrichtung imstande sind, in Bezug zueinander in eine Richtung orthogonal zur zweiten Achse (A2) zu gleiten.

## Revendications

1. Dispositif pour bloquer (1) l'aube (2) d'une turbine, l'aube (2) s'étendant le long d'un premier axe (A1) et comprenant deux parties d'extrémité (3, 5), dont chacune a une surface latérale (6 ; 7) adjacente à une surface inférieure (8 ; 9) généralement en forme de losange ; le dispositif de blocage (1) étant conçu pour maintenir l'aube (2) fixe pendant l'usinage d'au moins l'une des surfaces inférieures (8, 9) ; le dispositif de blocage (1) comprenant une structure de repos (10) qui s'étend le long d'un deuxième axe (A2) et est conçue pour supporter l'une des parties d'extrémité (3 ; 5) de l'aube (2), et une partie mobile (11) qui serre ladite partie d'extrémité (3 ; 5) de l'aube (2) pour permettre l'usinage complet de la surface inférieure (8 ; 9) de ladite partie d'extrémité (3 ; 5) de l'aube (2) ; le dispositif de blocage (1) étant **caractérisé en ce que** la partie mobile (11) comprend un élément de blocage (12) qui comprend un disque (34) qui est relativement fin et a un troisième axe (A3) transversal par rapport au deuxième axe (A2) ; le disque (34) étant supporté par la partie mobile (11) de sorte qu'il peut tourner autour du troisième axe (A3) ; le disque (34) ayant une partie découpée définissant des surfaces de couplage (36, 37) conçues pour être agencées en butée contre la surface latérale (6 ; 7) de ladite partie d'extrémité (3 ; 5).

2. Dispositif de blocage selon la revendication 1, **caractérisé en ce que** la partie mobile (11) et la structure de repos (10) sont orientées et formées de sorte que le premier axe (A1) de l'aube (2) est placé sensiblement horizontal.

3. Dispositif de blocage selon la revendication 1 ou la revendication 2, **caractérisé en ce que** la structure de repos (10) comprend une dent (16) qui définit un siège (24) conçu pour loger ladite partie d'extrémité (3 ; 5).

4. Dispositif de blocage selon la revendication 3, **caractérisé en ce que** le siège (24) comprend deux structures adjacentes (23, 25) qui forment un angle sensiblement égal à un premier angle (26) de la surface inférieure (8 ; 9) de ladite partie d'extrémité (3 ; 5) ; lesdites surfaces (23, 25) du siège (24) étant conçues pour être agencées en butée contre la surface latérale (6 ; 7) de ladite partie d'extrémité (3 ; 5).

5. Dispositif de blocage selon l'une quelconque des revendications précédentes, **caractérisé en ce que** la partie mobile (11) est un bras (27), qui a une première extrémité (28) et une seconde extrémité (29) ; la première extrémité (28) du bras (27) étant articulée par rapport à la structure de repos (10) et la seconde extrémité (29) du bras (27) étant conçue pour être mise en prise sur la structure de repos (10).

6. Dispositif de blocage selon la revendication 5, **caractérisé en ce que** la seconde extrémité (29) du bras (27) est mise en prise sur la structure de repos (10).

7. Dispositif de blocage selon la revendication 5 ou la revendication 6, **caractérisé en ce que** le bras (27) comprend deux sections adjacentes (31, 32) qui sont inclinées l'une par rapport à l'autre.

8. Dispositif de blocage selon la revendication 7, **caractérisé en ce que** la première section (31) comprend la première extrémité (28) du bras (27) et la seconde section (32) comprend la seconde extrémité (29) du bras (27) ; la première section (31) étant oblique par rapport au deuxième axe (A2) de la structure de repos (10) et la seconde section (32) étant parallèle au deuxième axe (A2) de la structure de repos (10).

9. Dispositif de blocage selon l'une quelconque des revendications 4 à 8, **caractérisé en ce que** les surfaces de couplage (36, 37) forment un angle sensiblement égal à un second angle (38) de la surface inférieure (8 ; 9) de ladite partie d'extrémité (3 ; 5) opposé au premier angle (26) de la surface inférieure (8 ; 9).

10. Dispositif de blocage selon l'une quelconque des revendications précédentes, **caractérisé en ce que** l'épaisseur du disque (34) est comprise entre 3 mm et 10 mm.

11. Dispositif de blocage selon l'une quelconque des revendications précédentes, **caractérisé en ce que** l'élément de blocage (12) comprend une poche (33) qui est fixée à la partie mobile (11) et définit un siège circulaire (35), conçu pour être mis en prise par le disque (34).

12. Dispositif de blocage selon la revendication 11, **caractérisé en ce que** la poche (33) s'étend autour du disque (34) le long d'un arc de circonférence qui sous-tend un angle supérieur à 180° pour retenir le disque (34) dans le siège (35).

13. Procédé pour usiner une aube (2) d'une turbine, l'aube (2) comprenant deux parties d'extrémité (3, 5) dont chacune a une surface latérale (6 ; 7) adjacente à une surface inférieure (8 ; 9) généralement en forme de losange ; le procédé comprenant les étapes consistant à bloquer l'aube (2) dans une position donnée ; et à réaliser une opération d'usinage avec le retrait des copeaux le long de l'une des parties d'extrémité (3 ; 5) pour redéfinir la forme de la surface inférieure (8 ; 9) ; le procédé étant **caractérisé en ce que** ladite partie d'extrémité (3 ; 5), dont la surface inférieure (8 ; 9) doit être redéfinie, est bloquée au moyen du dispositif de blocage (1) le long de la surface latérale (6 ; 7), comme revendiqué dans l'une quelconque des revendications précédentes.

14. Procédé pour usiner l'aube (2) d'une turbine selon la revendication 13, **caractérisé en ce que** ladite partie d'extrémité (3 ; 5) est bloquée de sorte que le premier axe (A1) de l'aube (2) est placé sensiblement horizontal.

15. Procédé pour usiner l'aube (2) d'une turbine selon la revendication 13 ou la revendication 14, **caractérisé en ce qu'**il comprend l'étape consistant à bloquer l'autre partie d'extrémité (5 ; 3) avec un autre dispositif de blocage selon l'une des revendications 1 à 12 avant de réaliser l'opération d'usinage avec le retrait des copeaux le long de ladite partie d'extrémité (3 ; 5) pour améliorer la stabilité de blocage.

16. Procédé pour usiner l'aube (2) d'une turbine selon la revendication 15, **caractérisé en ce que** le dispositif de blocage (1) et l'autre dispositif de blocage peuvent coulisser l'un par rapport à l'autre dans une direction orthogonale au deuxième axe (A2).
